# EUROPEAN PATENT APPLICATION

(11) **EP 2 439 689 A1**
(43) Date of publication of application: **11.04.2012**
(21) Application number: 11183944.5
(22) Date of filing: 05.10.2011
(51) Int. Cl.: G06Q 10/00

(54) **Complex event processing apparatus and complex event processing method**

(30) Priority: 05.10.2010 JP 2010226077
(71) Applicant: Fujitsu Limited, Kawasaki-shi, Kanagawa 211-8588 (JP)
(72) Inventor: Sakamoto, Yoshinori, Kanagawa, 211-8588 (JP)
(74) Representative: HOFFMANN EITLE

(57) **Abstract**

When a detecting complex event condition expression is changed, a rule comparing unit (51) compares the complex event condition expressions before and after the change. The changed portion identifying unit (52) identifies the changed portion based on the comparison result, and the parallel operating unit (53) operates the complex event condition expressions before and after the change in parallel for the detecting complex event condition expression including the identified changed portion. In this manner, the complex event processing apparatus disclosed therein can dynamically change a detecting complex event condition expression used in the complex event processing.

## Description

### FIELD

The embodiments discussed herein are directed to a complex event processing apparatus and a complex event processing method.

### BACKGROUND

Complex event processing (CEP), in which data generated in a system is monitored in real-time as a stream and a certain process is executed depending on the pattern of the data thus monitored, has been increasingly becoming popular in recent years. While CEP is sometimes referred to as event stream processing (ESP), ESP is herein included in CEP and collectively referred to as CEP.

As an example of CEP, a fluctuation of a stock price or a currency exchange rate is received as a stream, and transactions are executed automatically corresponding to the pattern of the fluctuation. As another example, a temperature detected with a temperature sensor installed outdoor or indoor is received as a stream, and a sprinkler is caused to operate automatically corresponding to a temperature change.

In CEP, a received stream is matched against a condition expression, which is referred to as a query or a rule, to detect an event, and the event thus detected is executed. As an example, a server performing CEP stores therein a query X for executing an event X when a phenomenon A, a phenomenon B, and a phenomenon C are detected consecutively, and a query Y for executing an event Y when the phenomenon A, the phenomenon B, and a phenomenon D are received within a predetermined time period.

The server detects a phenomenon from a received stream and stores the phenomenon in a memory or the like as intermediate data. When the phenomenon A, the phenomenon B, and the phenomenon C are stored consecutively as intermediate data, the server executes the event X. When the phenomenon A, the phenomenon B, and the phenomenon D are stored as intermediate data within the predetermined time period, the server executes the event Y. A related-art example is described in IT Architect, Vol. 23, IDG Japan, 2009, pp. 128-132.

In CEP, a detecting complex event condition expression (rule) is sometimes changed. However, because data streams keep arriving continuously, problems such as those described below might occur when a rule in CEP is changed.

In a conventional technology, once CEP is stopped and restarted after the rule is changed, the CEP becomes incapable of detecting events while the CEP is stopped and for a certain time period after restart. In addition, even when the load of the CEP is dynamically distributed based on a stream load, such a condition of the load distribution may not be inherited.

Accordingly, it is an object in one aspect of an embodiment of the invention to make it possible to dynamically change the detecting complex event condition expression in CEP.

### SUMMARY

According to an aspect of an embodiment of the invention, a complex event processing apparatus for processing a complex event by detecting an establishment status of a plurality of conditions so as to process an event includes a comparing unit that compares, when a detecting complex event condition expression is changed, complex event condition expressions before and after the change, an identifying unit that identifies a changed portion based on a result of comparison, and a parallel operating unit that operates the complex event condition expressions before and after the change in parallel, for the detecting complex event condition expression including the changed portion identified by the identifying unit.

According to another aspect of an embodiment of the invention, a complex event processing apparatus for processing a complex event by detecting an establishment status of a plurality of conditions so as to process an event includes a storing unit that stores the establishment status of the conditions, a stopping unit that stops detection of the establishment status of the conditions, a starting unit that restarts the detection, and a replaying unit that replays changes in the establishment status of the conditions having occurred at least during a period from when the detection is stopped to when the detection is restarted, after the starting unit restarts the detection.

According to still another aspect of an embodiment of the invention, a complex event processing apparatus for processing a complex event by detecting an establishment status of a plurality of conditions so as to process an event includes a creating unit that creates, when a detecting complex event condition expression is changed, a complex event condition expression after the change in a test mode, a parallel operating unit that operates the complex event condition expression before the change in parallel with the complex event condition expression after the change in the test mode, and a notifying unit that notifies the complex event condition expression in the test mode of the establishment status of the conditions in the complex event condition expression before the change, and reflects the establishment status to the complex event condition expression in the test mode.

### BRIEF DESCRIPTION OF DRAWINGS

FIG. 1 is a schematic of a configuration of a complex event processing (CEP) apparatus according to a first embodiment;
FIG. 2 is an illustrative schematic for explaining how the CEP works;
FIG. 3 is a schematic for explaining about how a rule is changed in the first embodiment;
FIG. 4 is a flowchart for explaining a process performed by a rule change processing unit 41;
FIG. 5 is a schematic of a configuration of a complex event processing apparatus according to a second embodiment;
FIG. 6 is a schematic for explaining an example of a situation in which no change is made to a rule while CEP is stopped;
FIG. 7 is a schematic for explaining an example of a situation in which the rule is changed while the CEP is stopped;
FIG. 8 is a flowchart of an operation performed by a rule change processing unit 42;
FIG. 9 is a schematic of a configuration of a complex event processing apparatus according to a third embodiment;
FIG. 10 is a schematic for explaining an operation performed by a rule change processing unit 43; and
FIG. 11 is a flowchart for explaining an operation performed by the rule change processing unit 43.

### DESCRIPTION OF EMBODIMENTS

Preferred embodiments of the present invention will be explained with reference to accompanying drawings. These embodiments are not intended to limit the technologies disclosed herein.

### [a] First Embodiment

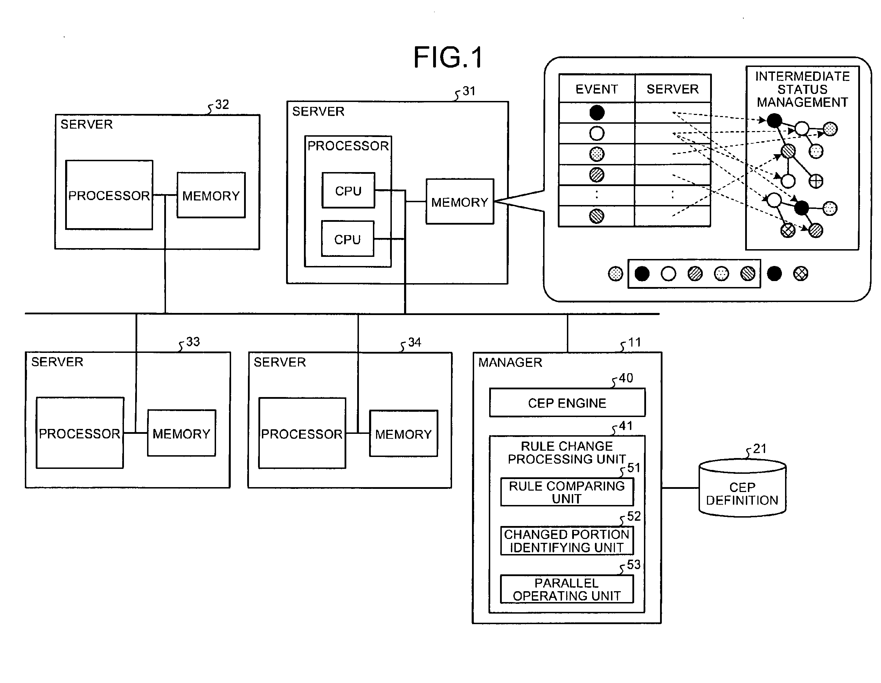

FIG. 1 is a schematic of a configuration of a complex event processing apparatus according to a first embodiment. As illustrated in FIG. 1 as one embodiment, the complex event processing apparatus has a configuration including servers 31 to 34 connected to a manager 11. Each of the servers 31 to 34 includes a processor having one or more central processing units (CPUs), and a memory. The servers 31 to 34 may be physical devices physically including a processor and a memory, or may be virtual machines (VMs) assigned with the processing capability and the memory of another device to operate.

The manager 11 includes a CEP engine 40 and a rule change processing unit 41. The CEP engine 40 makes a reference to a CEP definition database 21 to control data streams and to manage the CEP. In FIG. 1, the CEP engine is illustrated only in the manager. In addition, the CEP engine is also present in each of the servers performing a CEP process.

The rule change processing unit 41 performs a process of changing a CEP rule that is a detecting complex event condition expression. The rule change processing unit 41 includes a rule comparing unit 51, a changed portion identifying unit 52, and a parallel operating unit 53.

When a detecting complex event condition expression is changed, the rule comparing unit 51 compares complex event condition expressions before and after the change. Upon comparing the condition expressions, the rule comparing unit 51 may compare the rule descriptions specifying the conditions themselves, or CEP status management records and the like that are currently in operation. The changed portion identifying unit 52 identifies which portion of the rule is changed based on the comparison result. The parallel operating unit 53 operates the rules before and after the change in parallel, for the rule including the changed portion thus identified.

The parallel operating unit 53 also deletes the rule before the change, after event management information associated with the complex event condition expression before the change is exported as the management information for the rule after the change and the rule after the change is activated.

In this manner, the rule change processing unit 41 changes a CEP rule dynamically without stopping the operation of the CEP, by causing the rule comparing unit 51, the changed portion identifying unit 52, and the parallel operating unit 53 to operate.

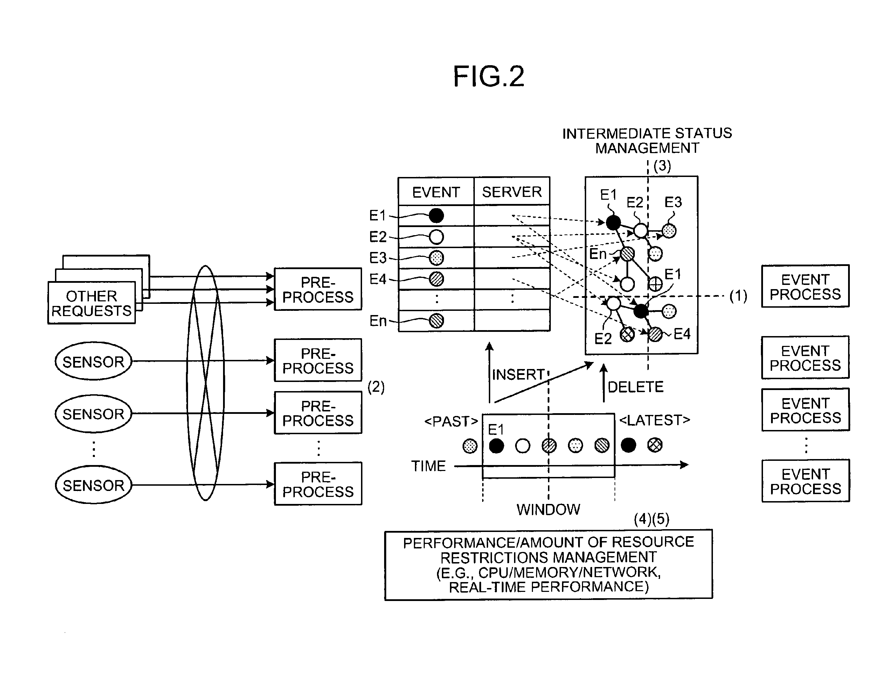

FIG. 2 is an illustrative schematic for explaining how the CEP works. Data streams received from various sensors undergo a pre-process, and are determined as to whether various conditions are established within a window representing a predetermined range of time, the number of events, and the like. In FIG. 2, E1 to En represent such conditions, and a combination of establishments of some of these conditions E1 to En is defined as a complex event condition (rule). When such a rule is satisfied, a corresponding event will be processed.

Conditions and combinations of such conditions included in a rule are registered in the CEP definition database 21. The number of conditions in a rule being satisfied at a certain point in time is managed as intermediate status management. The intermediate status management may be loaded onto the memory of the manager 11 or the servers 31 to 34. The manager 11 also manages the performance of, the amount of resources in, and restrictions on the servers 31 to 34. More specifically, the manager 11 manages central processing units (CPUs), memories, networks, and real-time performance and the like.

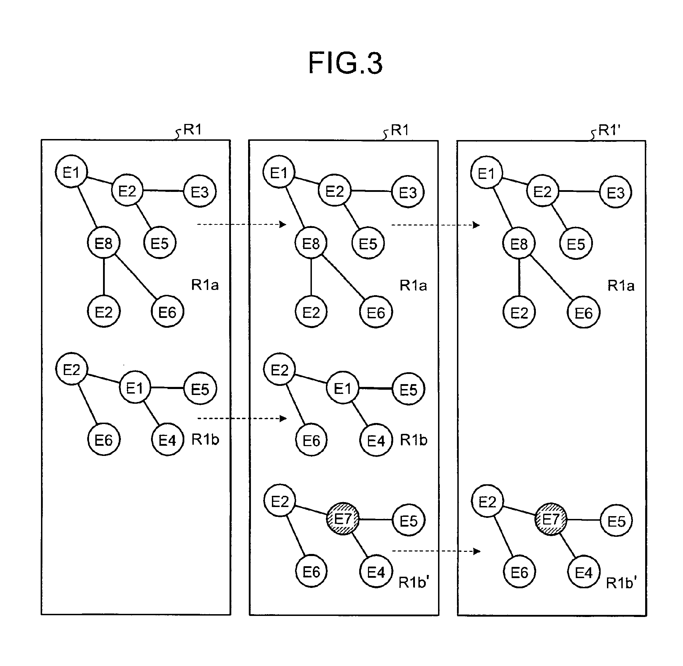

FIG. 3 is a schematic for explaining about how a rule is changed in the first embodiment. The rule R1 illustrated in FIG. 3 is a rule having a sub-rule R1a that is a combination of conditions E1 to E3, E5, E6, and E8, and a sub-rule R1b that is a combination of conditions E1, E2, and E4 to E6. The sub-rule R1a is met when the conditions E2 and En are satisfied after the condition E1 is satisfied, the conditions E3 and E5 are satisfied after the condition E2 is satisfied, and the conditions E2 and E6 are satisfied after the condition En is satisfied.

Similarly, the sub-rule R1b is met when the conditions E1 and E6 are satisfied after the condition E2 is satisfied, and the conditions E5 and E4 are satisfied after the condition E1 is satisfied.

An example of changing the rule R1 to a rule R1' will now be explained. The rule R1' is a rule in which the condition E1 in the sub-rule R1b of the rule R1 is replaced with a condition E7, thus changing the sub-rule R1b to a sub-rule R1b'.

The rule comparing unit 51 compares the rule R1 before the change with the rule R1' after the change. The changed portion identifying unit 52 identifies that a condition in the sub-rule R1b' has been changed based on the result of the comparison between these rules. The parallel operating unit 53 temporarily operates both of the sub-rule R1b before the change and the sub-rule R1b' after the change in parallel, adds and merges the window and the intermediate status management record and the like related to the sub-rule R1b', which is the new rule, and deletes the sub-rule R1b, which is the old rule, when the new rule becomes active. As ways for activating the sub-rule after the change, activation may be delayed until a predetermined range completes, or the sub-rule may be activated quickly by tracking back a stream log and replaying the log.

When an addition, instead of a change, is made to the rule, the new rule, and the window and the intermediate status management record and the like related to the new rule are added immediately. When a rule is deleted, the old rule to be deleted, and the window and the intermediate status management record and the like related to the old rule can simply be deleted immediately.

In this manner, the rule change processing unit 41 specifies and detects a portion having been changed (or added or deleted) in the CEP rule, and designates a new and changed (or added or deleted) rule to the old rule that is currently in operation. The old and the new rules are then compared to determine the portion having been changed in the rule description or the operation environment. An example of the operation environment includes intermediate status management.

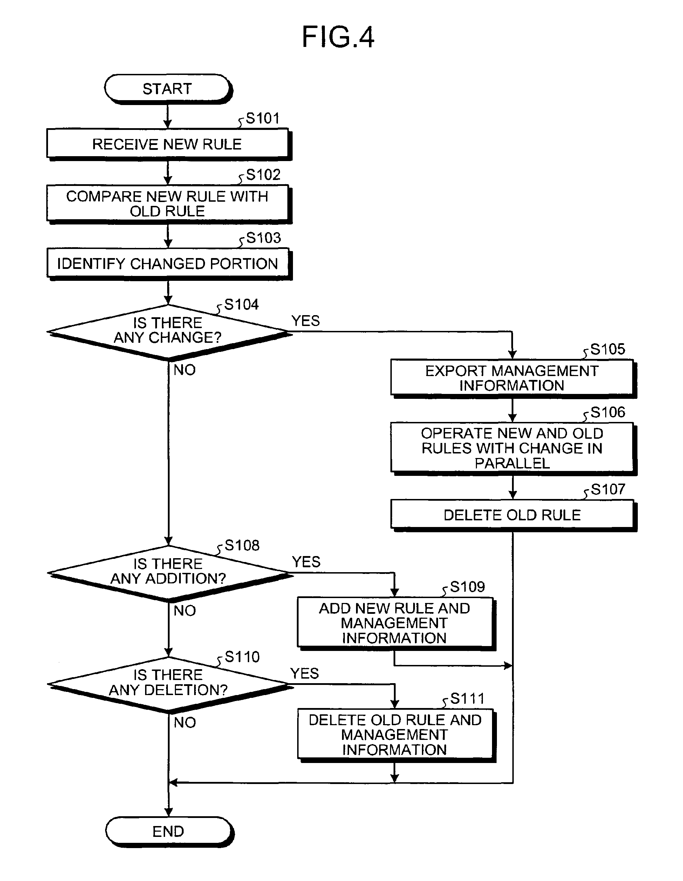

FIG. 4 is a flowchart for explaining a process performed by the rule change processing unit 41. To begin with, the rule comparing unit 51 included in the rule change processing unit 41 receives a new rule (S101), and compares the new rule with the old rule (S102). The changed portion identifying unit 52 then identifies a changed portion based on the comparison result (S103). As a result, if a rule has been changed (YES at S104), the management information is exported from the old rule to the new rule (S105). The parallel operating unit 53 then operates the new rule in parallel with the old rule related to the change (S106), deletes the old rule (S107), and ends the process.

When the rule is not changed (NO at S104) but is added (YES at S108), the rule change processing unit 41 adds the management information corresponding to the new rule (S109), and ends the process.

When the rule is not added (NO at S108) but deleted (YES at S110), the rule change processing unit 41 deletes the management information corresponding to the old rule (S111), and ends the process. If no rule is deleted (NO at S110), in other words, if there is no difference between the new rule and the old rule, the process is ended as it is.

As described above, in the complex event processing apparatus according to the first embodiment, when a detecting complex event condition expression is changed, the rule comparing unit 51 compares the complex event condition expressions before and after the change. The changed portion identifying unit 52 then identifies a changed portion based on the comparison result, and the parallel operating unit 53 operates the complex event condition expression after the change in parallel with the complex event condition expression before the change, for the detecting complex event condition expression including the changed portion thus identified. Therefore, the complex event processing apparatus disclosed herein can dynamically change the detecting complex event condition expression used in the complex event processing.

### [b] Second Embodiment

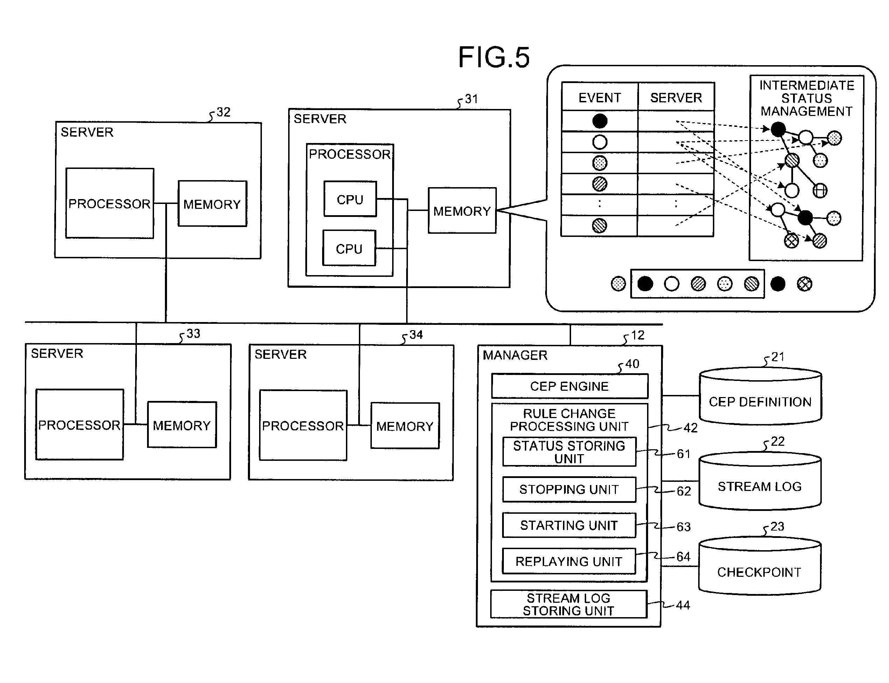

FIG. 5 is a schematic of a configuration of a complex event processing apparatus according to a second embodiment of the present invention. In the second embodiment, a manager 12 includes the CEP engine 40, a rule change processing unit 42, and a stream log storing unit 44. The manager 12 is connected to, as well as the CEP definition database 21, a stream log database 22 and a checkpoint database 23. The other components and operations performed thereby are the same as those according to the first embodiment. Therefore, the same components are given the same reference numerals, and explanations thereof are omitted hereunder.

The rule change processing unit 42 includes a status storing unit 61, a stopping unit 62, a starting unit 63, and a replaying unit 64. The status storing unit 61 stores the establishment status of a plurality of conditions of a rule as a checkpoint in the checkpoint database 23. The stopping unit 62 stops the rule so as to stop detecting the establishment status of the conditions. The stream storing process may be notified that the CEP or a rule has been stopped, or the identifier of the last stream completed with the CEP process may be stored (marked) on the side of the CEP checkpoint process, for example. The starting unit 63 restarts the rule to restart detecting the establishment status of the conditions.

The replaying unit 64 reads changes in the establishment status of the conditions having occurred during the period at least from when the detection is stopped to when the detection is started from the stream log database 22, and replays the changes after the starting unit 63 restarts the rule.

The stream log storing unit 44 keeps obtaining data streams continuously both while the CEP is in operation and is stopped, and stores the data streams in the stream log database 22.

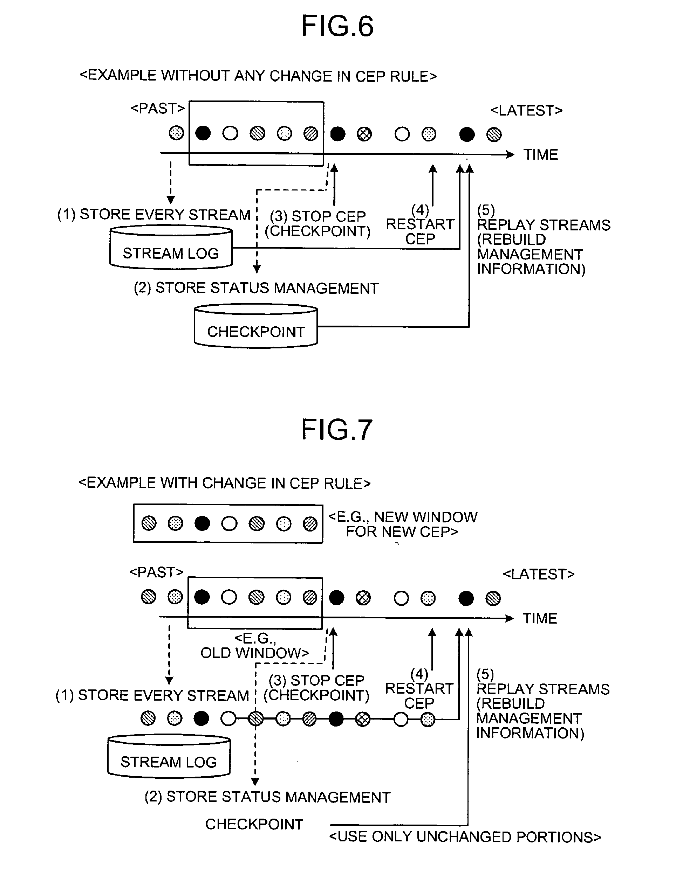

FIG. 6 is a schematic for explaining an example of a situation in which no change is made to the rule while the CEP is stopped. (1) The storing process of every stream is performed "continuously" not only while the CEP is stopped, that is, not only for the period of a checkpoint, in other words, regardless the CEP is in operation or stopped. (2) The status management is stored and (3) the CEP is stopped (at a checkpoint) almost at the same time when the CEP is stopped. When (3) the CEP is stopped (at the checkpoint), the identifiers of streams having completed with the CEP process are stored.

When the CEP is stopped, the status storing unit 61 stores the CEP management record (e.g., the window or the intermediate status management) in the checkpoint database 23. The stream log storing process is then notified that the CEP has been stopped. This notification is a part of the checkpoint. The stream storing process may be notified that the CEP has been stopped, or the identifier of the last stream completed with the CEP process may be stored (marked) on the side of the CEP checkpoint process, for example.

The CEP management record is then restored from the checkpoint when the rule is restarted. The replaying unit 64 then replays the stream log corresponding to the period while the CEP is stopped to detect phenomena therefrom while the CEP is stopped. The replaying unit 64 replays the stream log so as to replay the phenomena in the data streams. Therefore, the data streams may be replayed at faster occurrence timing of the phenomena than that in the original, in other words, may be replayed at a faster speed. The restarted CEP receives and processes the replayed data streams to generate events.

FIG. 7 is a schematic for explaining an example of a situation in which the rule is changed while the CEP is stopped. For the rules to which no change has been made, the CEP management records are restored following the same steps as those illustrated in FIG. 6. For a rule in which a change has been made, the stored stream log is tracked back by the new window, replayed therefrom, and the new window and the intermediate status management record for the new rule are created. At the same time, the management record and the resources for the old rule are released. After a situation is restored to the point at which the CEP was stopped, the replaying unit 64 replays the stream log after restarting the checkpoint with the rules, including those with no change, so as to allow the events after the restart to be detected.

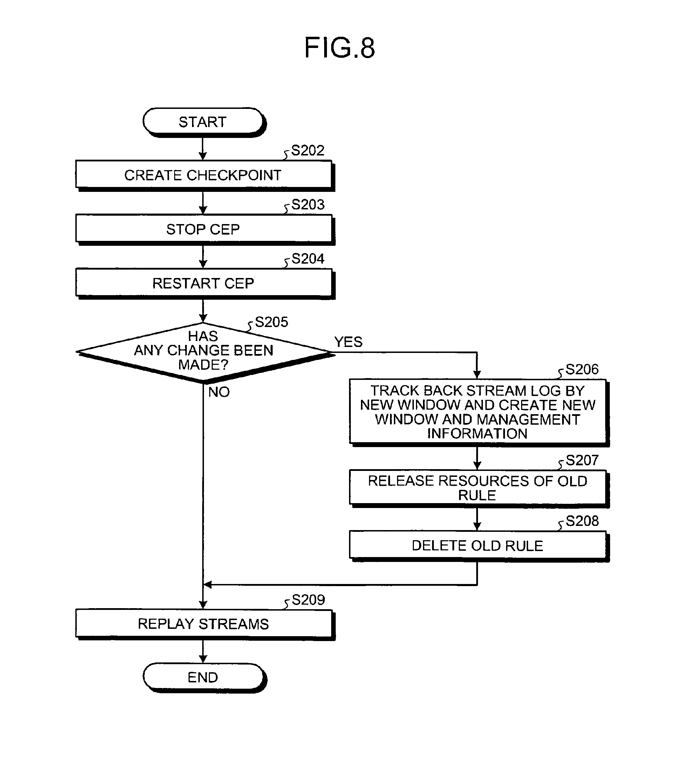

FIG. 8 is a flowchart of an operation performed by the rule change processing unit 42. To begin with, the rule change processing unit 42 creates a checkpoint as required (S202). After the stopping unit 62 stops the CEP (S203), the starting unit 63 restarts the CEP (S204), then the rule change processing unit 42 determines if any change has been made to the rules while the CEP is stopped (S205).

If no change has been made while the CEP is stopped, the replaying unit 64 replays the streams for the period while the CEP is stopped (S209), and ends the process. If any change has been made to the rules while the CEP is stopped (YES at S205), the replaying unit 64 tracks back the stream log by the new window, and creates the new window and the management information (S206). The rule change processing unit 42 then releases the resources used for the old rule (S207), and deletes the old rule (S208). The replaying unit 64 then replays the streams (S209), and ends the process.

As described above, in the complex event processing apparatus according to the second embodiment, the status storing unit 61 creates a checkpoint, and the replaying unit 64 replays the streams for the period from when the CEP is stopped by the stopping unit 62 and to when the CEP is restarted by the starting unit 63. If a change is made to a rule while the CEP is stopped, the replaying unit 64 tracks back the log by the new window and replays the streams. Therefore, even if the CEP is stopped, the complex event processing apparatus disclosed herein can detect events during the time the CEP is stopped and after the CEP is restarted. Furthermore, a rule can be changed while the CEP is stopped. If the load of the CEP has been distributed dynamically based on the stream load, such a condition of load distribution can also be inherited.

### [c] Third Embodiment

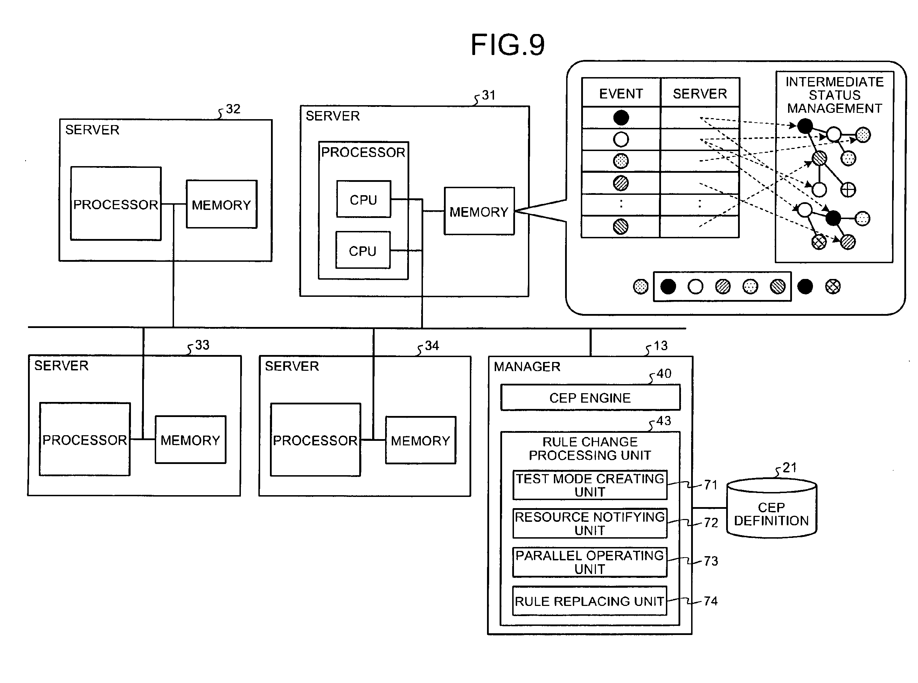

FIG. 9 is a schematic of a configuration of a complex event processing apparatus according to a third embodiment. In the third embodiment, a manager 13 includes the CEP engine 40 and a rule change processing unit 43. The other components and operations performed thereby are the same as those according to the first embodiment. Therefore, the same components are given the same reference numerals, and explanations thereof are omitted hereunder.

The rule change processing unit 43 includes a test mode creating unit 71, a resource notifying unit 72, a parallel operating unit 73, and a rule replacing unit 74. When a rule is changed, the test mode creating unit 71 creates the rule after the change in a test mode. The parallel operating unit 73 operates the rule before the change in parallel with the rule after the change in the test mode. The resource notifying unit 72 then notifies and reflects the establishment status of the conditions of the rule before the change to the rule in the test mode. The rule replacing unit 74 then changes the mode of the rule after the change from the test mode to a normal mode, and deletes the rule before the change.

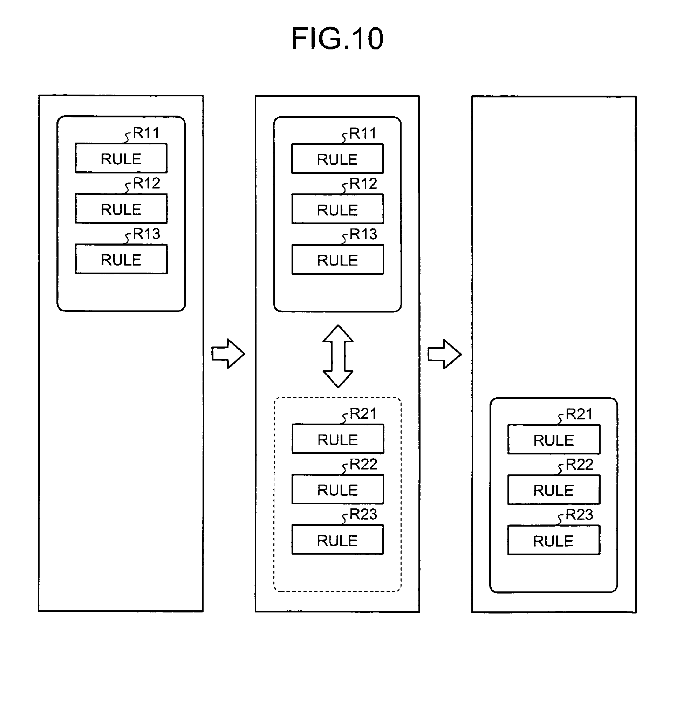

FIG. 10 is a schematic for explaining an operation performed by the rule change processing unit 43. In an explanation of the example illustrated in FIG. 10, rules R11 to R13 are operating as old rules, and these rules are replaced with rules R21 to R23, respectively.

The rule change processing unit 43 at first operates the rules R21 to R23 that are new rules in the "test mode", and entire related parties recognize the "test mode" concerning related applications and data, for example.

The old rules R11 to R13 then notify the new rules R21 to R23 of resources (a condition of a parallel distribution, for example), and synchronize the resource conditions with the new rules R21 to R23. At this time, if an extra capacity is available in the same resource as the old rules (server), the new rules are assigned to that resource. If an extra capacity is not available in the resource, it is preferable to assign the new rules to a different resource.

After operating and validating the new rules R21 to R23 in the test mode for a certain time period, the old rules R11 to R13 are replaced with the new rules R21 to R23. In other words, the old rules R11 to R13 are shifted to the test mode, and the new rules R21 to R23 are shifted to the normal mode. If no problem occurs after replacing the rules, the new rules R21 to R23 are kept being operated as the official version, and the operations of the old rules R11 to R13 are stopped. In this manner, the rule change processing unit 43 inherits the condition of the resources (the condition of the parallel distribution, for example) to the new rules.

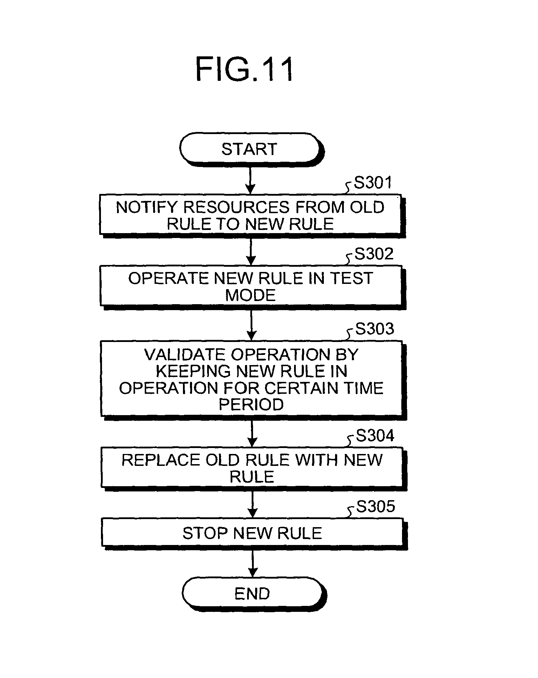

FIG. 11 is a flowchart for explaining an operation performed by the rule change processing unit 43. To begin with, the resource notifying unit 72 in the rule change processing unit 43 notifies the new rules of the resources of the old rules (S301). The test mode creating unit 71 then operates the new rules in the test mode (S302), and keeps operating the new rules for a certain time period to validate the operations performed thereby (S303). After confirming that no problem occurs by the operation validation, the rule replacing unit 74 replaces the old rules with the new rules (S304), stops the operations of the old rules (S305), and ends the process.

As described above, in the complex event processing apparatus according to the embodiment, the test mode creating unit 71 operates the new rules in the test mode in parallel with the old rules, and the resource notifying unit 72 notifies the new rules of the resources utilized by the old rules. Therefore, the complex event processing apparatus disclosed herein can dynamically change a detecting complex event condition expression used in the complex event processing. In addition, when the load of the CEP has been dynamically distributed based on the stream load, such a condition of the load distribution can be inherited.

The complex event processing apparatuses disclosed in the first to the third embodiments may also be realized as computer programs. Such complex event processing programs are executed on a computer, in other words, the programs are loaded onto a memory, and each procedure thereof is sequentially executed by a processor to cause the computer to perform the same operations as those performed by the complex event processing apparatus as described above. Furthermore, the complex event processing programs can be stored in a non-transitory computer-readable storage medium such as Solid State Drive (SSD), Hard Disk Drive (HDD) and the like.

The complex event processing apparatus, the complex event processing method, and the complex event processing program disclosed in the present application can dynamically change a detecting complex event condition expression in complex event processing.

## Claims

1. A complex event processing apparatus (11) for processing a complex event by detecting an establishment status of a plurality of conditions so as to process an event, the complex event processing apparatus (11) comprising:
a comparing unit (51) that compares, when a detecting complex event condition expression is changed, complex event condition expressions before and after the change;
an identifying unit (52) that identifies a changed portion based on a result of comparison; and
a parallel operating unit (53) that operates the complex event condition expressions before and after the change in parallel, for the detecting complex event condition expression including the changed portion identified by the identifying unit (52).

2. The complex event processing apparatus (11) according to claim 1, wherein the parallel operating unit (53) exports event management information for the complex event condition expression before the change as management information for the complex event condition expression after the change, and deletes the complex event condition expression before the change.

3. A complex event processing apparatus (12) for processing a complex event by detecting an establishment status of a plurality of conditions so as to process an event, the complex event processing apparatus comprising:
a storing unit (61) that stores the establishment status of the conditions;
a stopping unit (62) that stops detection of the establishment status of the conditions;
a starting unit (63) that restarts the detection; and
a replaying unit (64) that replays changes in the establishment status of the conditions having occurred at least during a period from when the detection is stopped to when the detection is restarted, after the starting unit (63) restarts the detection.

4. The complex event processing apparatus (12) according to claim 3, wherein, when a time window for detecting the establishment status of the conditions is changed during the period from when the detection is stopped to when the detection is restarted, the replaying unit (64) replays changes in the establishment status of the conditions having occurred in the time window changed.

5. A complex event processing apparatus (13) for processing a complex event by detecting an establishment status of a plurality of conditions so as to process an event, the complex event processing apparatus comprising:
a creating unit (71, 74) that creates, when a detecting complex event condition expression is changed, a complex event condition expression after the change in a test mode;
a parallel operating unit (73) that operates the complex event condition expression before the change in parallel with the complex event condition expression after the change in the test mode; and
a notifying unit (72) that notifies the complex event condition expression in the test mode of the establishment status of the conditions in the complex event condition expression before the change, and reflects the establishment status to the complex event condition expression in the test mode.

6. The complex event processing apparatus (13) according to claim 5, wherein the creating unit (71, 74) deletes the complex event condition expression before the change, and shifts the complex event condition expression after the change from the test mode into a normal mode.

7. A complex event processing method for processing a complex event by detecting an establishment status of a plurality of conditions so as to process an event, the complex event processing method comprising:
comparing, when a detecting complex event condition expression is changed, complex event condition expressions before and after the change;
identifying a changed portion based on a result of comparison; and
operating the complex event condition expressions before and after the change in parallel, for the detecting complex event condition expression including the changed portion identified at the identifying.

8. A complex event processing method for processing a complex event by detecting an establishment status of a plurality of conditions so as to process an event, the complex event processing method comprising:
storing the establishment status of the conditions;
stopping detection of the establishment status of the conditions;
restarting the detection; and
replaying changes in the establishment status of the conditions having occurred at least during a period from when the detection is stopped to when the detection is restarted, after the detection is restarted.

9. A complex event processing method for processing a complex event by detecting an establishment status of a plurality of conditions so as to process an event, the complex event processing method comprising:
creating, when a detecting complex event condition expression is changed, a complex event condition expression after the change in a test mode;
operating the complex event condition expression before the change in parallel with the complex event condition expression after the change in the test mode; and
notifying the complex event condition expression in the test mode of the establishment status of the conditions in the complex event condition expression before the change, and reflecting the establishment status to the complex event condition expression in the test mode.

10. A computer-readable medium storing a program for processing a complex event by detecting an establishment status of a plurality of conditions so as to process an event, the program causing a computer to execute:
comparing, when a detecting complex event condition expression is changed, complex event condition expressions before and after the change;
identifying a changed portion based on a result of comparison; and
operating the complex event condition expressions before and after the change in parallel, for the detecting complex event condition expression including the changed portion identified at the identifying.

11. A computer-readable medium storing a program for processing a complex event by detecting an establishment status of a plurality of conditions so as to process an event, the program causing a computer to execute:
storing the establishment status of the conditions;
stopping detection of the establishment status of the conditions;
restarting the detection; and
replaying changes in the establishment status of the conditions having occurred at least during a period from when the detection is stopped to when the detection is restarted, after the detection is restarted.

12. A computer-readable medium storing a program for processing a complex event by detecting an establishment status of a plurality of conditions so as to process an event, the program causing a computer to execute:
creating, when a detecting complex event condition expression is changed, a complex event condition expression after the change in a test mode;
operating the complex event condition expression before the change in parallel with the complex event condition expression after the change in the test mode; and
notifying the complex event condition expression in the test mode of the establishment status of the conditions in the complex event condition expression before the change, and reflecting the establishment status to the complex event condition expression in the test mode.
